# EUROPEAN PATENT APPLICATION

(11) **EP 1 795 321 A2**
(43) Date of publication of application: **13.06.2007**
(21) Application number: 06024898.6
(22) Date of filing: 01.12.2006
(51) Int. Cl.: B29C 33/18, B29C 43/18, B29C 43/56

(54) **Die for plastic material with a covering film**

(30) Priority: 06.12.2005 IT mi20050428
(71) Applicant: Persico S.p.A., 24027 Nembro (BG) (IT)
(72) Inventor: Carissimi, Alessandro, 24020 Ranica BG (IT)
(74) Representative: Faraggiana, Vittorio

(57) **Abstract**

A die (10) for pressing plastic material with a covering film (12) between the plastic material and the moulding wall (11) includes passages (14) made in the moulding wall and connected to a source of vacuum (15) to facilitate adhesion of the film to the wall. In the passages (14) there is a filter element (16) equipped with a removable filter (19) which can be easily replaced if the plastic material comes into contact with it.

## Description

This invention relates to an innovative die for plastic material with covering film.

In the production of plastic parts, dies with a film to be positioned in the die cavity before pressing are often used. A typical example but not the only one consists of the production of polyurethane foam articles for sound-proofing of automotive vehicles.

Insertion of these films can have two different purposes. The first is to obtain a finished part covered with the above-mentioned film. In this case the film remains adherent to the part once pressed. This is typical of applications in which it is desired to cover the finished part with a different material having, for example, insulating or aesthetic functions compared with the rest of the material.

A second purpose could be to insulate the surface of the die from the pressing material to avoid its adhesion, facilitate its detachment and keep the die surface clean. In this case the film does not adhere to the finished part and is removed after pressing.

In both cases the covering film is made to adhere temporarily to the die surface by application of vacuum through a series of suction holes appropriately distributed over the die surface.

It may happen during the various operations that the film tears accidentally and as a result the pressing plastic comes into contact with the die and goes to obstruct the holes prearranged for the vacuum.

This brings on the necessary intervention of cleaning of the holes, often realized manually with punches or drill bits, an operation which constitutes a loss of time and continuity of production and in the long run even loss of quality of the die.

A possible improvement is the use of metal inserts containing the holes for the vacuum to be fastened or screwed into the die and these are removed and replaced when the hole are obstructed.

In this case also the operation is laborious.

The general purpose of this invention is to remedy the above-mentioned shortcomings by making available a die allowing easy cleaning of the vacuum holes if plastic material comes into contact with the die.

In view of this purpose it was sought to provide in accordance with this invention a die for pressing plastic material with a covering film placed between the plastic material and the moulding wall and passages made in the moulding wall and connected to a vacuum source to facilitate adhesion of the film to the wall and characterized in that there is a filter element with a removable filter in the passages.

To clarify the explanation of the innovative principles of this invention and its advantages compared with the prior art there is described below with the aid of the annexed drawings a possible embodiment thereof by way of non-limiting example applying said principles. In the drawings:
FIG 1 shows a diagrammatic cross section view of a die realized in accordance with this invention, and
FIG 2 shows an enlarged partially exploded cross section view of a detail of the die of FIG 1.

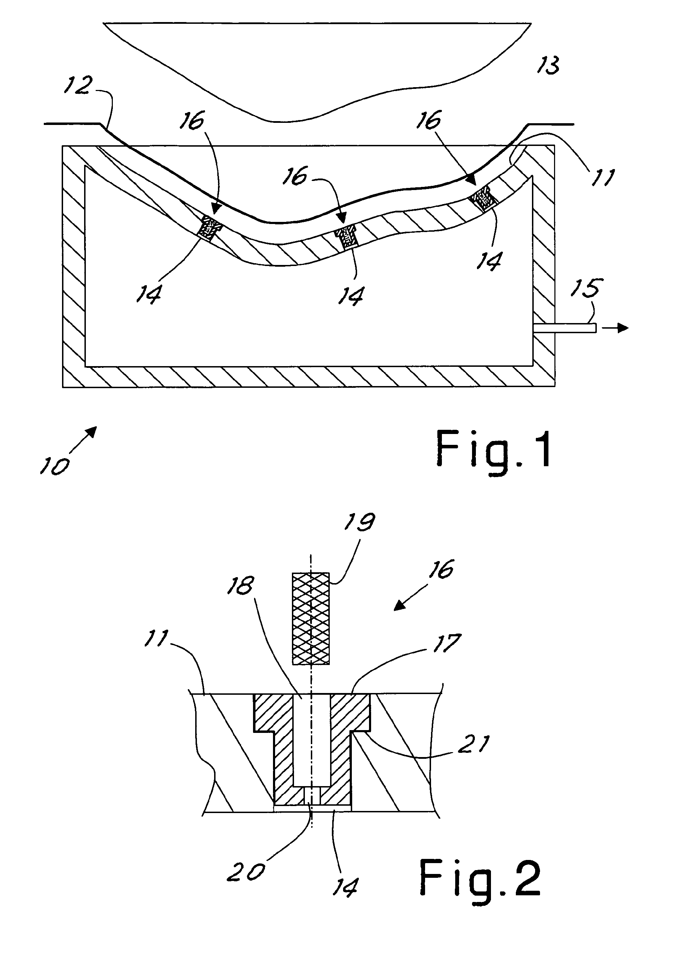

With reference to the figures, FIG 1 shows diagrammatically a die designated as a whole by reference number 10 and realized by applying the principles of this invention.

The die includes a moulding cavity defined by a moulding surface or wall 11 on which is arranged a flexible sheet or film 12 to produce a pressed part 13 of plastic material. The film can have non-stick or covering functions of the pressed part.

On the surface 11 of the die there are passages 14 in communication with a source of vacuum 15 to produce withholding suction of the sheet 12 against the surface 11.

In the passages 14, filter elements 16 are inserted allowing suction of air through porous filter.

As shown better in FIG 2 the filter elements include bushings 17 with a passage seat 18 in which is housed a filter of porous material 19, for example, of natural or synthetic fiber. The seat has a narrow passage 20 on the bottom to constitute an end of travel to introduction of the filter advantageously withheld only by pressure in the seat.

The bushings 17 are advantageously made of low-adhesion coefficient material compared with the plastic material to be pressed (for example, bushings of PTFE to press polyurethane foam). These bushings can be fastened to the die by any known method such as, for example, mechanically forcing, gluing, threading or other. Bushing and filter are advantageously cylindrical. The bush can include a circumferential striker edge 21 in the passage 14 (complementarily shaped) in the die wall.

If it comes in contact with the plastic pressing material the porous filter can be simply pulled out and replaced by another insert.

This way, the operation is decidedly faster and cheaper compared with those necessary in the known art for restoring the functions of the die.

Naturally the above description of an embodiment applying the innovative principles of this invention is given by way of non-limiting example of said principles within the scope of the exclusive right claimed here. For example, the form of the die and the arrangement of the suction passages depend on specific practical requirements.

## Claims

1. Die (10) for pressing plastic material with a covering film (12) between the plastic material and the moulding wall (11) and including passages (14) made in the moulding wall and connected to a source of vacuum (15) to facilitate adhesion of the film to the wall and **characterized in that** in the passages (14) there is a filter element (16) equipped with a removable filter (19).

2. Die in accordance with claim 1 **characterized in that** the filter elements include a bushing (17) of material with stick-proof properties for the plastic material to be pressed and fastened in the passage (14) in the moulding wall of the die and with a seat (18) which receives the removable filter (19).

3. Die in accordance with claim 1 **characterized in that** the removable filter (19) is pressed into the seat (18) from the inside of the die.

4. Die in accordance with claim 1 **characterized in that** the removable filter (19) is of porous natural fiber or synthetic material.

5. Die in accordance with claim 2 **characterized in that** the bushing (17) is of PTFE.

6. Die in accordance with claim 2 **characterized in that** the bushing (17) is cylindrical with a circumferential edge (21) projecting for support into the opposite passage (14) of the wall complementarily shaped.
